(19) Europäisches Patentamt
European Patent Office
Office européen des brevets

(11) **EP 4 446 718 A1**

(12) **EUROPEAN PATENT APPLICATION**
published in accordance with Art. 153(4) EPC

(43) Date of publication:
**16.10.2024 Bulletin 2024/42**

(21) Application number: **22903820.3**

(22) Date of filing: **21.09.2022**

(51) International Patent Classification (IPC):
***G01M 13/04*** (2019.01)    ***G01N 27/90*** (2021.01)

(52) Cooperative Patent Classification (CPC):
**G01M 13/04; G01N 27/90**

(86) International application number:
**PCT/JP2022/035248**

(87) International publication number:
**WO 2023/105886 (15.06.2023 Gazette 2023/24)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.12.2021 JP 2021199783**

(71) Applicant: **NSK Ltd.**
**Tokyo 141-8560 (JP)**

(72) Inventor: **KOBAYASHI Daisuke**
**Fujisawa-shi, Kanagawa 251-8501 (JP)**

(74) Representative: **Rings, Rolf**
**Klingseisen, Rings & Partner**
**Patentanwälte**
**Postfach 10 15 61**
**80089 München (DE)**

(54) **METHOD FOR UNDERSTANDING DAMAGE OF BEARING**

(57)    A method for understanding damage of a bearing includes: a measurement step of measuring at least one first measurement position $P_1$ on a raceway surface (10) of a bearing (1) and at least one second measurement position $P_2$ on a reference surface (11), the reference surface (11) being a surface different from the raceway surface (10) of the bearing (1), using an ECT device; and a determination step of, by comparing a measurement result in the measurement step and a reference value corresponding to measurement values measured by the ECT device on the raceway surface (10) and the reference surface (11) of the bearing (1), the raceway surface (10) and the reference surface (11) being equivalent to a brand-new raceway surface (10) and reference surface (11), respectively, determining a damage degree of the bearing.

FIG. 3A

**(Cont. next page)**

# FIG. 3B

## Description

Technical Field

The present invention relates to a method for understanding damage of a bearing.

Background Art

A rolling bearing (also referred to as a bearing) is a mechanical element that supports rotation of a shaft by rolling elements rolling on raceway surfaces on an outer ring and an inner ring. When a bearing is used in an ideal environment, the bearing can be used until the bearing is broken (reaches the end of its life). However, lives of bearings are not necessarily the same life because of various factors, such as variation in material, even when the bearings are produced in the same production step. In addition, depending on a use environment, a bearing is sometime broken earlier than an expected life. Therefore, it can be said that a measurement method enabling when a bearing is broken to be understood is an important technology.

As technologies having hitherto been developed, a technology for detecting vibration generated when a bearing is broken and a method for capturing a moment at which a crack occurs by acoustic emission (AE) as described in PTL 1 are known. However, the above-described technologies cannot detect damage unless damage actually occurs in a bearing. Although it is desirable to be able to confirm when a bearing is broken before damage actually occurs, it is extremely difficult to visually determine a state of a bearing in a clear method.

In order to solve the above-described problems, a lot of technologies for understanding a life of a bearing before the bearing is damaged have been studied. For example, in PTL 2, a method for understanding a state of a material structure by X-ray diffraction (XRD) method is reported. The XRD is a method for estimating a state of a material structure and is used not only for a bearing but also in a lot of technical fields. However, in order to understand a state of a bearing by use of X-rays, X-rays are required to be directly radiated on a raceway surface. Since it is therefore required to cut a bearing when a raceway surface of an outer ring is measured, the bearing cannot be reused. Since even when an inner ring is to be measured, the inner ring cannot be placed on a measuring stand depending on size of the inner ring, there are some cases where it is required to cut the inner ring and the bearing cannot be reused. In addition, as a method other than the XRD, a method of state detection in a nondestructive method by use of magnetism is reported in PTL 3. Although the method described in PTL 3 is an extremely simplified method and is applicable to measurement at a use site, in order to evaluate a state of a bearing, relative comparison with a state when the bearing is brand-new needs to be performed. Thus, when the method in PTL 3 is employed, it is required to understand a state of a bearing to be measured when the bearing is a brand-new bearing, which involves a significant difficulty.

Citation List

Patent Literature

PTL 1: JP H04-036633 A
PTL 2: JP 2014-013188 A
PTL 3: JP 2013-160561 A

Summary of Invention

Technical Problem

Accordingly, the present invention has been made focusing on the above-described problem, and an object of the present invention is to provide a method for understanding damage of a bearing that enables a damage degree of a bearing to be understood without destroying the bearing and in a simplified method.

Solution to Problem

According to one aspect of the present invention, a method for understanding damage of a bearing includes: a measurement step of measuring at least one first measurement position on a raceway surface of a bearing and at least one second measurement position on a reference surface, the reference surface being a surface different from the raceway surface of the bearing, using an ECT device; and a determination step of, by comparing a measurement result in the measurement step and a reference value corresponding to measured values measured by the ECT device on the raceway surface and the reference surface of the bearing, the raceway surface and the reference surface being equivalent to a brand-new raceway surface and reference surface, respectively, determining a damage degree of the bearing is provided.

Advantageous Effects of Invention

According to the one aspect of the present invention, a method for understanding damage of a bearing that enables a damage degree of a bearing to be understood without destroying the bearing and in a simplified method is provided.

Brief Description of Drawings

FIG. 1 is side views illustrative of an outer ring and an inner ring of a bearing, and FIGS. 1A and 1B illustrate the outer ring and the inner ring, respectively;

FIG. 2 is a schematic diagram illustrative of a method in which a raceway surface of the outer ring is measured using an ECT device;

FIG. 3 is side views illustrative of measurement positions measured by the ECT device on the outer ring depending on whether or not a load is applied to the outer ring, and FIGS. 3A and 3B illustrate measurement positions in a case where a load zone exists and measurement positions in a case where no load zone exists, respectively;

FIG. 4 is side views illustrative of measurement positions measured by the ECT device on the inner ring depending on whether or not a load is applied to the inner ring, and FIGS. 4A and 4B illustrate measurement positions in a case where a load zone exists and measurement positions in a case where no load zone exists, respectively;

FIG. 5 is a processing flow diagram in a determination step;

FIG. 6 is a side view illustrative of measurement positions measured by the ECT device on an outer ring of another bearing;

FIG. 7 is a graph illustrative of a relationship between an initial voltage difference and a raceway surface diameter on bearings having different dimensions; and

FIG. 8 is a graph illustrative of a relationship between a measured voltage value on a raceway surface and a raceway surface diameter on the bearings having different dimensions.

Description of Embodiments

In the following detailed description, an embodiment of the present invention will be described with reference to the drawings. In the description of the drawings, the same or similar parts are provided with the same or similar reference signs, and descriptions thereof will be omitted. The respective drawings are schematic and include a drawing that do not necessarily depict the actual dimensions or precise configurations of practical implementation of the present invention. In addition, the following embodiment indicates devices and methods to embody the technical idea of the present invention by way of example, and the technical idea of the present invention does not limit the material, configurations, arrangements, and the like of the constituent components to those described below. The technical idea of the present invention can be subjected to a variety of alterations within the technical scope prescribed by the claims described in CLAIMS.

<Method for Understanding Damage of Bearing>

A method for understanding damage of a bearing according to one embodiment of the present invention will be described. In the present embodiment, a damage degree of a bearing, in other words, a state of the bearing, is to be understood with respect to an inner ring and an outer ring of the bearing. Herein, the state of a bearing to be understood indicates states of the bearing from a state in which the bearing is a brand-new (unused) bearing to a state before damage, such as spalling, occurs to the bearing in association with use of the bearing. A state of a material structure of a raceway surface of a bearing gradually changes over operation time under the influence of a load and the like in association with use of the bearing. The change in the material structure specifically means decomposition of retained austenite generated by heat treatment, relaxation of strain, or the like. Since retained austenite is a non-magnetic layer and strain in the material is involved in ease of movement of magnetic domain walls that influences magnetic properties, a change in the material structure involves a change in magnetism.

(Measurement Step)

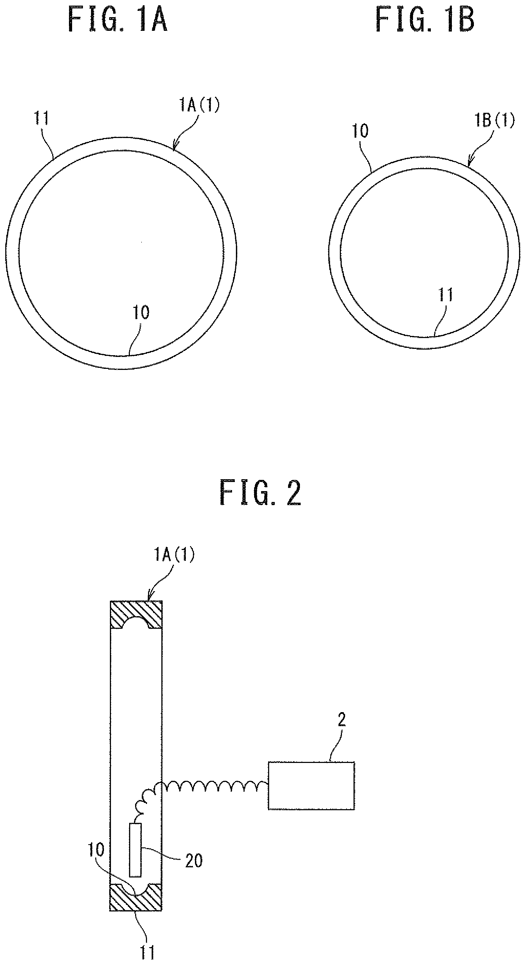

In the present embodiment, first, a measurement step of measuring at least one first measurement position on a raceway surface of a bearing and at least one second measurement position on a reference surface that is a surface different from the raceway surface of the bearing, using an eddy current testing (ECT) device (eddy current flaw detection testing device) is performed. Note that measurement using the ECT device is also referred to as ECT measurement. A bearing includes an outer ring, rolling elements, and an inner ring. In the present embodiment, as an example, a mode in which damage of an outer ring 1A or an inner ring 1B of a bearing 1 illustrated in FIG. 1 is understood will be described. In addition, the bearing 1 to be measured is not in a state of a brand-new bearing but in a state of a bearing after use, and disassembling the target bearing 1 enables a position on the outer ring 1A or the inner ring 1B to be measured by the ECT device. Further, as illustrated in FIG. 1, on each of the outer ring 1A and the inner ring 1B, a surface on which the rolling elements roll is referred to as a raceway surface 10 and a specific surface among surfaces other than the raceway surface 10 is referred to as a reference surface 11. In the case of the outer ring 1A, the center in the width direction of an inner diameter surface is the raceway surface 10, and at least a selected one of an outer diameter surface and end surfaces is the reference surface 11. In addition, in the case of the inner ring 1B, the center in the width direction of an outer diameter surface is the raceway surface 10, and at least a selected one of an inner diameter surface and end surfaces is the reference surface 11. Note that in the present embodiment, as an example, the outer diameter surface of the outer ring 1A and the inner diameter surface of the inner ring 1B are defined as the reference surfaces 11.

An ECT device 2 is, as illustrated in FIG. 2, a device that generates an eddy current and at the same time detects output voltage generated by the eddy current. The ECT device 2 includes a probe 20 configured to sense an eddy current generated in a surface portion of metallic material of the bearing 1. In addition, inside the probe 20, a not-illustrated test coil that is formed as a portion of a bridge circuit is mounted. The ECT device 2 applies excitation current of a predetermined frequency to the test coil in the probe 20 and induces an eddy current on a measurement surface of the bearing. At the same time, the ECT device 2 detects output voltage across the test coil that changes based on the eddy current.

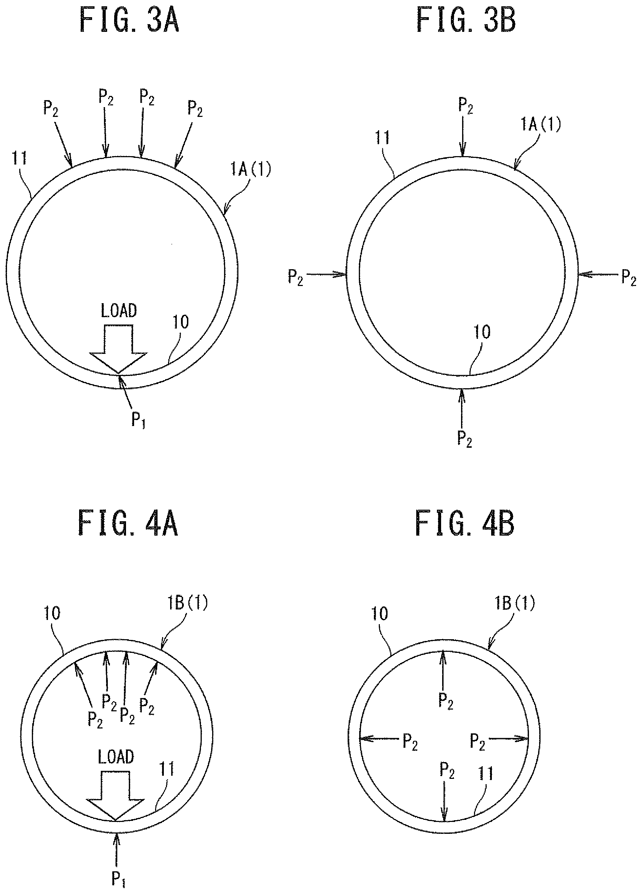

The first measurement position is a position at which damage of the raceway surface 10 of the bearing 1 is desired to be understood. The first measurement position is, although not specifically limited, preferably a position on a part to which a load is applied most within the raceway surface 10 in order to measure a site of the bearing 1 that is most severely damaged. For example, as illustrated in FIGS. 3A and 4A, on an outer ring 1A or an inner ring 1B that has a load zone, it is preferable to set a radial direction position to which a load is applied most on the raceway surface 10 as a first measurement position $P_1$. Alternatively, a plurality of positions existing in a vicinity of a radial direction position to which a load is applied most on the raceway surface 10 with the radial direction position at the center may be set as first measurement positions $P_1$. In addition, as illustrated in FIGS. 3B and 4B, on an outer ring 1A or an inner ring 1B that does not have a load zone, a first measurement position $P_1$ does not have to be limited to a specific position. In addition, on the outer ring 1A and the inner ring 1B that do not have a load zone, setting a plurality of first measurement positions $P_1$ enables measurement precision to be improved. Note that a case where a load zone exits is a case where the outer ring 1A or the inner ring 1B to be measured is a fixed ring, and a case where a load zone does not exist is a case where the outer ring 1A or the inner ring 1B to be measured is a rotating ring.

A second measurement position is a position set on the reference surface 11. The reference surface 11 is preferably a position on a surface that is different from the raceway surface 10 and where measurement can be stably performed as described above, and in the present embodiment, the outer diameter surface is set as a measurement surface when the outer ring 1A is a measurement target and the inner diameter surface is set as a measurement surface when the inner ring 1B is a measurement target. Note that as long as it is possible to perform stable measurement, the reference surface 11 may be another surface, such as an end surface. In addition, since fretting or the like sometimes occurs when the bearing 1 is incorporated in a machine, a position that is hardly damaged as much as possible is preferably selected as a second measurement position when the outer diameter surface of the outer ring 1A or the inner diameter surface of the inner ring 1B is set as the reference surface 11 as in the present embodiment. In addition, since a site where a damage degree is apparently severe is inappropriate as a second measurement position, such a site is preferably excluded.

For example, as illustrated in FIGS. 3A and 4A, on the outer ring 1A or the inner ring 1B that has a load zone, it is preferable to set a position on the reference surface, the position being in a non-load zone to which no load is applied, as the second measurement position $P_2$. In this case, it is preferable to set, for example, a position in the non-load zone that is 180° opposite to the load zone to which a load is applied, as the second measurement position $P_2$. In addition, when a plurality of second measurement positions $P_2$ are defined, an interval between the second measurement positions (measurement interval) is preferably set to an interval between positions that are separated from each other by twice the diameter or more of an iron core in the probe 20. For example, when the diameter of the iron core in the probe 20 is 3 mm, the measurement interval may be set to 6 mm or more. On the other hand, since as illustrated in FIGS. 3B and 4B, a load is applied to the entire circumference on the outer ring 1A or the inner ring 1B that does not have a load zone, the second measurement position $P_2$ may be set to any position. For example, in the case of FIGS. 3B and 4B, four positions separated from each other at equal intervals on the outer circumferential surface or the inner circumferential surface are set as four second measurement positions (four equally spaced positions). Note that the second measurement position is only required to be at least one or more positions, and when a plurality of points are to be defined, the second measurement positions are preferably set as equally spaced positions from a viewpoint of uniformly capturing quality of the bearing 1.

In the measurement step, output voltage values at the first measurement position $P_1$ and the second measurement position $P_2$ are measured using the ECT device 2. Note that in the example illustrated in FIG. 2, a manner in which the first measurement position $P_1$ on the raceway surface 10 of the outer ring 1A is measured using the ECT device 2 is illustrated.

(Determination Step)

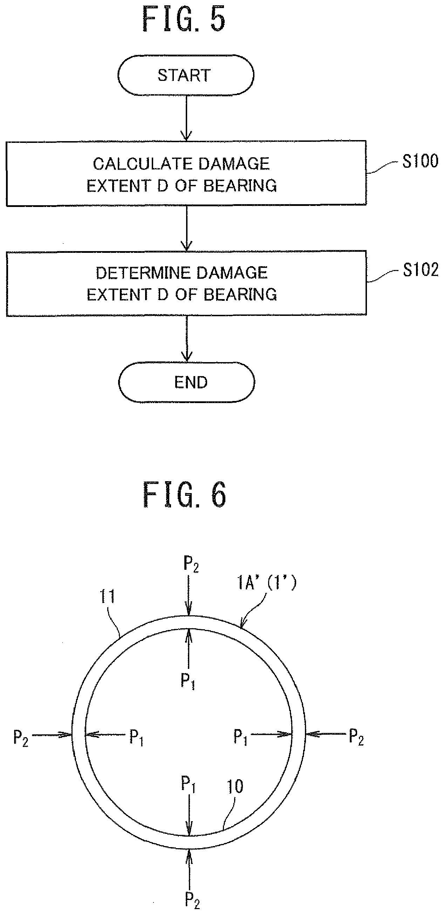

After the measurement step, a determination step of, by comparing a measurement result in the measurement step and a reference value corresponding to measured values measured by the ECT device 2 on the raceway surface 10 and the reference surface 11 of the bearing 1, the raceway surface 10 and the reference surface 11 being equivalent to a brand-new raceway surface 10 and reference surface 11, respectively, determining a damage degree of the bearing 1 is performed. In the determination step, the determination of a damage degree is performed in accordance with a process flow illustrated in FIG. 5.

In the determination step, a damage degree of the bearing 1 is calculated from a measurement result in the measurement step (S100). In step S100, a damage degree D of the bearing 1 is calculated using the equation (1). Note that D denotes a value indicating a damage degree of the bearing 1, $V_1$ denotes a first voltage value (V) that is a measured value measured by the ECT device 2 at the first measurement position $P_1$, $V_2$ denotes a second voltage value (V) that is a measured value measured by the ECT device 2 at the second measurement position $P_2$, and S denotes a reference value. The reference value S is a value corresponding to measured values measured by the ECT device 2 on the raceway surface 10 and the reference surface 11 of the bearing 1, the raceway surface 10 and the reference surface 11 being equivalent to a brand-new raceway surface 10 and reference surface 11, respectively, and is, for example, a difference between a voltage value on the raceway surface 10 and a voltage value on the reference surface 11 of the bearing 1 equivalent to a brand-new bearing. In addition, a difference $(V_1\text{-}V_2)$ between the first voltage value and the second voltage value is also referred to as a measured voltage difference.

$$D=(V_1-V_2)-S \quad \cdot \quad \cdot \quad \cdot \quad (1)$$

When a plurality of first measurement positions $P_1$ are defined, a damage degree D is calculated with respect to each of a plurality of first voltage values $V_1$ corresponding to the plurality of first measurement positions $P_1$. When one second measurement position $P_2$ is defined, a voltage value measured at the one second measurement position $P_2$ is used as the second voltage value $V_2$. On the other hand, when a plurality of second measurement positions $P_2$ are defined, an average value of voltage values measured at the plurality of second measurement positions $P_2$ is used as the second voltage value $V_2$. Note that when in the case where a plurality of second measurement position $P_2$ are defined, an apparently abnormal voltage value is included due to a reason such as damage of the bearing 1, the second voltage value $V_2$ may be set by excluding the abnormal value.

A relationship between a measurement result measured by the ECT device 2 at a first measurement position $P_1$ and a second measurement position $P_2$ of a bearing 1 after use and a damage degree, the relationship being knowledge acquired by the inventors, will be described below. For example, as disclosed in PTL 3, when the bearing 1 after use is measured by the ECT device 2, a change appears in measured values in comparison with measured values when the bearing 1 was brand-new, and a damage degree of the bearing 1 can be understood from the amount of the change. Specifically, for a measurement result measured by the ECT device, a damage degree of the bearing 1 can be calculated using the equation (2) below. Note that D' denotes a damage degree of the bearing 1, $V_a$ denotes a measured voltage value (also referred to as a measured value) measured by the ECT device with respect to the raceway surface 10 of the bearing 1 after use, and $V_b$ denotes a measured voltage value measured by the ECT device with respect to the raceway surface 10 of the bearing 1 before use.

$$D'=V_a-V_b \quad \cdot \quad \cdot \quad \cdot \quad (2)$$

In such a method for understanding damage, it is necessary to perform an eddy current flaw detection test on the raceway surface 10 with respect to the bearing 1 before use in advance. In addition, since a voltage value of the bearing 1 before use changes depending on a minute difference in components or production conditions of the bearing 1 due to a difference between production lots or the like, the voltage value is preferably a measured value of the same bearing 1 as the bearing 1 to be evaluated after use and, in order to improve measurement precision, is required to be at least a measured value of a bearing 1 in the same production lot as the bearing 1 to be evaluated after use. However, although there is no problem when a target bearing 1 can be measured at the start of use, a bearing 1 before use cannot be measured by the ECT device when the bearing 1 is assembled in a production stage. In addition, although the measurement precision can be improved by preparing a bearing 1 produced in the same production lot as a bearing 1 to be measured after use, such a bearing 1 sometimes cannot be prepared depending on size of the bearing 1.

Thus, the inventors examined a technology for evaluating a state of a bearing 1 without measuring a brand-new bearing 1, and has acquired knowledge about a method of using a measurement result of an eddy current flaw detection test on a raceway surface 10 and a reference surface 11 and a reference value equivalent to a reference value of a brand-new bearing. The inventors have also acquired knowledge that the reference value equivalent to a reference value of a brand-new bearing can be calculated from not only a measurement result of a product in the same production lot or a product having the same dimension but also a measurement result of another bearing having a different dimension when the bearing is brand-new. Specifically, the inventors have acquired knowledge that a damage degree of a bearing 1 can be evaluated using the above-described equation (1).

The reference value S in the equation (1) can be calculated using, for example, the equation (3). Note that $V_3$ denotes a third voltage value (V) that is a measured value measured by the ECT device 2 at a third measurement position, and $V_4$ denotes a third voltage value (V) that is a measured value measured by the ECT device 2 at a third measurement position. In addition, a difference $(V_3\text{-}V_4)$ between the third voltage value $V_3$ and the fourth voltage value $V_4$ is also referred to as an initial voltage difference $\Delta V_0$ (V).

$$S = V_3 - V_4 \quad \cdot \quad \cdot \quad \cdot \quad (3)$$

The third voltage value $V_3$ and the fourth voltage value $V_4$ in the equation (3) are measured values of another bearing having the same dimension as the bearing 1 the damage degree of which is to be understood, the measured values being measured by the ECT device 2 when the another bearing is brand-new. The bearing having the same dimension means a bearing having the same raceway surface diameter, and may be a bearing having a different bearing form. In addition, the bearing 1 the damage degree of which is to be understood and the another bearing may be bearings having different production conditions in heat treatment or the like. Note that the bearing 1 the damage degree of which is to be understood and the another bearing are preferably made of the same material. The third measurement position is a position on the raceway surface of the another bearing, and the fourth measurement position is a position on the reference surface of the another bearing. In other words, by performing measurement of the third voltage value $V_3$ and the fourth voltage value $V_4$ with respect to the another bearing, using the ECT device 2, the reference value S can be calculated. Note that although it is only required to perform the measurement at at least one third measurement position and at least one fourth measurement position, performing the measurement at a plurality of third measurement positions and a plurality of fourth measurement positions and using average values of measured voltage values enable precision to be improved. In this case, with respect to the another bearing, the plurality of third measurement positions and the plurality of fourth measurement positions are preferably set as equally spaced positions. In addition, as illustrated in FIG. 6 in which an example in which measurement is performed with respect to an outer ring 1A' of another bearing 1' is illustrated, it may be configured such that the number of the plurality of third measurement positions $P_3$ and the number of the plurality of fourth measurement position $P_4$ are set to the same number and positions in the circumferential direction of the outer ring 1A' of the third measurement positions $P_3$ and positions in the circumferential direction of the outer ring 1A' of the fourth measurement positions $P_4$ are set to the same positions.

In addition, as the reference value S, a reference value matching a bearing the damage of which is to be understood may be set from a measurement result with respect to a bearing 1 having a different dimension, the measurement result being measured by the ECT device 2 when the bearing 1 is brand-new. In this case, ECT measurement is performed with respect to a plurality of brand-new bearings 1 having different dimensions, and from measurement results, a relationship between the dimension of a bearing 1 and an initial voltage difference $\Delta V_0$ is calculated. In this case, the ECT measurement is also performed with respect to a plurality of other brand-new bearings having different dimensions. Subsequently, with respect to each of the other bearings, an initial voltage difference $\Delta V_0$ based on at least one third measurement position on the raceway surface 10 and at least one fourth measurement position on the reference surface 11 is calculated, using the equation (4). By performing measurement in this way, a relationship between the dimension of a bearing and the initial voltage difference $\Delta V_0$ is calculate.

$$\Delta V_0 = V_3 - V_4 \quad \cdot \quad \cdot \quad \cdot \quad (4)$$

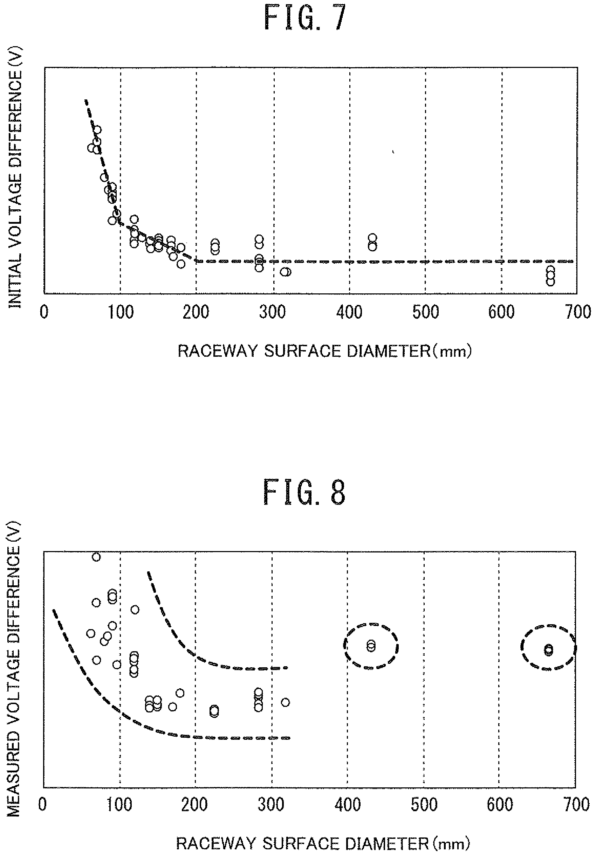

In FIG. 7, measurement results of the initial voltage differences $\Delta V_0$, each of which is a difference $(V_3 - V_4)$ between the third voltage value $V_3$ and the fourth voltage value $V_4$ of one of bearings 1 having different dimensions when the bearing 1 is brand-new, are illustrated. In the measurement illustrated in FIG. 7, the measurement was performed with respect to the outer rings 1A of brand-new bearings 1, using an ECT device 2 produced by ACTUNI Co., Ltd. As the bearings 1, bearings having different bearing shapes, such as a tapered roller bearing, a cylindrical roller bearing, and a spherical roller bearing, were used. In addition, as the outer rings 1A of the bearings 1, outer rings having raceway surface dimensions (diameter of a central portion of a raceway surface) of 62 mm to 666 mm were used. Note that although all the measured bearings 1 are made of the same material, the bearings 1 include bearings produced under different heat treatment conditions, depending on forms of the bearings. Further, the measurement was performed with respect to four third measurement positions $P_3$ and four fourth measurement positions $P_4$ that are arranged at four equally spaced positions as illustrated in FIG. 6, and average values of measured voltage values at the third measurement positions $P_3$ and measured voltage values at the fourth measurement positions $P_4$ were set as a third voltage value V3 and a fourth voltage value V4, respectively.

Measurement results by the ECT device 2 are represented by biaxial coordinates, that is, the X-Y coordinates. As measurement conditions, an excitation frequency is set to 128 kHz, GAIN is set to 25 dB, and a phase is adjusted in such a method that a direction of change in a voltage value due to influence of a sensor gap is parallel with the X-axis (as the probe 20 is brought closer to a sample surface, a measured value changes in the positive direction). Voltage measured in this way is also referred to as X voltage. Note that voltage measured when the phase is adjusted in such a method that the direction of change in the voltage value is perpendicular to the X-axis is also referred to as Y voltage. The ordinate in FIG. 7 represents the initial voltage difference, and the abscissa represents the raceway surface diameter (mm) of a bearing 1.

As illustrated in FIG. 7, the dimension (raceway surface diameter) of a bearing 1 and the initial voltage difference have a correlation, and the correlation is represented by a graph illustrated by a dashed line in FIG. 7. From this graph, it is revealed that a gradient of change is different for each raceway surface dimension. In other words, calculating an equation with respect to each dimensional range enables an initial voltage difference for each dimension to be calculated. For example, in the case of FIG. 7, the initial voltage difference $AV_0$ (V) is expressed by the following equations (5) to (7) depending on raceway surface diameter x (mm). Note that a to e denotes constants.

$$\Delta V_0 = ax + b \quad (x < 100) \quad . \quad . \quad . \quad (5)$$

$$\Delta V_0 = cx + d \quad (100 \leq x \leq 200) \quad . \quad . \quad . \quad (6)$$

$$\Delta V_0 = e \quad (x > 200) \quad . \quad . \quad . \quad (7)$$

Thus, a relationship between the dimension of a bearing 1 and the initial voltage difference is calculated with respect to each type of the bearing 1 in advance, and from the relationships and the dimension of a bearing 1 the damage of which is to be understood, an initial voltage difference of the bearing 1 the damage of which is to be understood can be calculated. Note that values of a gradient and an intercept of each equation obtained by the above-described method and a dimension serving as a change point between equations differ depending on measurement conditions (excitation frequency, GAIN, and the like) of the ECT device 2 and a type of a probe 20 to be used. Therefore, it is required to determine a gradient and an intercept of each linear expression with respect to each of measurement conditions including the probe 20 to be used. Since a method for calculating an initial voltage difference $\Delta V_0$ is the same even when the measurement condition changes, performing measurement in accordance with the above-described method enables an initial voltage difference $\Delta V_0$, which is a voltage difference when a bearing 1 is equivalent to brand-new, that is, a reference value S, for each measurement condition to be calculated. Note that the relational equation between the dimension of a bearing 1 and the initial voltage difference is not limited to a relational equation obtained by linear approximation and may be a relational equation obtained by curve approximation.

FIG. 8 is a graph illustrative of measured voltage values (X voltages) measured only on the raceway surfaces 10 of the bearings 1 illustrated in FIG. 7 by the ECT device 2, with respect to, as with FIG. 7, raceway surface dimensions. When the raceway surface diameter is less than or equal to 350 mm, the measured voltage value and the raceway surface dimension have a correlation and the measured voltage value has a similar trend to that of the initial voltage difference illustrated in FIG. 7. However, when the raceway surface diameter is less than or equal to 120 mm, a large variation is observed in measured values. Based on this result, it is revealed that use of the initial voltage difference is a measurement method that enables variation in measured data to be suppressed regardless of the dimension. Further, in FIG. 8, measured values when the raceway surface diameter is 430 mm and 666 mm (marks in regions surrounded by dashed line circles in FIG. 8) have different trends from measured values in other regions. This is because the bearings 1 having raceway surface diameters of 430 mm and 666 mm are samples in which heat treatment conditions are different from heat treatment conditions of other bearings 1. On the other hand, in the initial voltage difference illustrated in FIG. 7, influence of a difference in heat treatment conditions is not observed. The reason for the phenomenon is that the outer diameter surface, which is employed as a reference to indicate a difference, is also subjected to the same heat treatment. Based on this result, it can also be said that a method for performing evaluation using a voltage difference between the raceway surface 10 and the reference surface 11 as in the present embodiment is a method applicable to a bearing regardless of heat treatment as long as the bearing is made of the same material and is subjected to heat treatment evenly and uniformly.

After step S100, the calculated damage degree D of the bearing 1 is determined (S102). The measured voltage difference ($V_1$-$V_2$) of the bearing 1 does not largely change from the reference value when the bearing 1 is used under mild use conditions. However, the severer an environment in which the bearing 1 is used is, the larger the change becomes. In step S102, damage of the bearing 1 is determined from the amount of the change.

Although there are various definitions of damage, a damage degree is defined by, for example, quantifying conditions of a material structure of a raceway surface that change in association with rolling contact fatigue, by XRD. Specifically, samples the test durations of which are different from one another are prepared in advance, the XRD is performed on the samples, and the amounts of change in material structures from the material structure of a brand-new bearing are calculated (evaluation using the amount of change in retained austenite, the amount of change in full-width at half-maximum, or residual stress as a parameter). When it is assumed that the amount of change in the material structure of a bearing having resulted in spalling is the amount of change in the material structure of a bearing that has been used 100%, the amount of change in the material structure of a bearing not having resulted in spalling and the amount of change in the material structure of the bearing having resulted in spalling are compared and what percentage a damage degree of the bearing not having resulted in spalling is understood. By summarizing correlations between measurement results by the ECT device 2 and XRD evaluation results at the same measurement positions, a bearing damage understanding database based on ECT measurement can be generated. Use of the database enables a use state to be evaluated from an ECT measurement result, and when this method using the database can be used as one of methods for evaluating necessity of maintenance, such as urging replacement of a bearing when the bearing is evaluated to have a damage degree of 50% or more, it is possible to use a bearing more safely and effectively than ever.

By the processing described thus far, understanding of damage of a bearing 1 is performed. According to the method for understanding damage of a bearing according to the present embodiment, a damage degree D is calculated from a measured voltage difference and a reference value corresponding to an initial voltage difference that is equivalent to a voltage difference when the bearing 1 is brand-new. In addition, as the initial voltage difference, a measurement result by the ECT device 2 with respect to another brand-new bearing having the same dimension as the bearing 1 or a plurality of other brand-new bearings the dimensions of which are different from one another is used. Because of this configuration, even when a measured voltage value on the raceway surface 10 of a bearing 1 the damage degree of which is to be understood when the bearing 1 is a brand-new bearing is not available or when another brand-new bearing produced in the same production lot or having the same size cannot be prepared, a damage degree of the target bearing 1 can be understood. In addition, although when an initial voltage difference of another bearing is measured in advance, a damage degree can be immediately understood, a damage degree can also be easily measured later as needed even when an initial voltage difference of another bearing is not measured in advance. Further, when a reference value is determined from a relationship between the dimension of a bearing and an initial voltage difference, a plurality of bearings the dimensions of which are different from one another may be subjected to ECT measurement in advance with respect to each of the materials of the bearings 1. Since by performing measurement in this way, a relationship between the dimension of a bearing and an initial voltage difference is understood in advance, a damage degree of the target bearing 1 can be understood in a short period of time.

Note that in the case where to where on a raceway surface 10 a load is applied is not clear or in the case where the entire circumference is used as a load zone when the raceway surface 10 after use is to be measured for understanding damage, a plurality of first measurement positions may be measured while shifting a measurement position in the circumferential direction or the axial direction. By performing measurement in this way, damage degrees at a plurality of positions are compared and a site to which a load is applied most can be thereby detected. In addition, a maximum damage degree among the damage degrees is evaluated as the damage degree of the bearing. Observing a distribution of damage degrees obtained by performing measurement at a plurality of points enables what load is applied to the raceway surface of the bearing to be revealed. In other words, it becomes possible to understand a use state. When it is understood that a bearing is used in a manner different from a load application manner that is assumed at the time of design, such as a load being intensively applied to one side of a raceway surface instead of the center of the raceway surface, it becomes possible to provide advice, such as reconsideration of use conditions, as needed basis.

<Variation>

Although the present invention was described above with reference to a specific embodiment, the description is not intended to limit the invention. By referring to the description of the present invention, not only the disclosed embodiment but also other embodiments of the present invention including various variations are apparent to a person skilled in the art. Therefore, it should be understood that the embodiments of the present invention described in the claims also includes embodiments including such variations described herein individually or in combination.

For example, although in the examples illustrated in FIGS. 7 and 8, examination was performed with respect to the X voltage, a voltage value used as a measured voltage value may be the Y voltage or both the X voltage and the Y voltage.

Reference Signs List

1, 1'      Bearing
1A, 1A'    Outer ring
1B, 1B'    Inner ring
10         Raceway surface
11         Reference surface
2          ECT device
20         Probe

**Claims**

1. A method for understanding damage of a bearing, the method comprising:

   a measurement step of measuring at least one first measurement position on a raceway surface of a bearing and at least one second measurement position on a reference surface, the reference surface being a surface different from the raceway surface of the bearing, using an ECT device; and
   a determination step of, by comparing a measurement result in the measurement step and a reference value corresponding to measured values measured by the ECT device on the raceway surface and the reference surface of the bearing, the raceway surface and the reference surface being equivalent to a brand-new raceway surface and reference surface, respectively, determining a damage degree of the bearing.

2. The method for understanding damage of the bearing according to claim 1, wherein in the determination step, the method calculates the damage degree, using an equation (1):

$$D=(V_1-V_2)-S \quad . \quad . \quad . \quad (1)$$

where D is a damage degree,
S is a reference value (V),
$V_1$ is a first voltage value (V) at a first measurement position, and
$V_2$ is a second voltage value (V) at a second measurement position.

3. The method for understanding damage of the bearing according to claim 2, wherein

the reference value is calculated from measured values when at least one third measurement position on the raceway surface of the bearing, the raceway surface being equivalent to a brand-new raceway surface, and at least one fourth measurement position on the reference surface of the bearing, the reference surface being equivalent to a brand-new reference surface, are measured using the ECT device, using an equation (3):

$$S=V_3-V_4 \quad . \quad . \quad . \quad (3)$$

where $V_3$ is a third voltage value (V) at a third measurement position, and
$V_4$ is a fourth voltage value (V) at a fourth measurement position.

4. The method for understanding damage of the bearing according to claim 3, wherein the reference value is set using measured values when, with respect to another brand-new bearing having a same dimension as the bearing, the at least one third measurement position and the at least one fourth measurement position are measured by the ECT device.

5. The method for understanding damage of the bearing according to claim 2, wherein

the reference value is calculated from relationships between initial voltage differences and dimensions on a plurality of other bearings,
the plurality of other bearings are brand-new bearings including a bearing having the dimension different from the others, and
the initial voltage difference is calculated from measured values when at least one third measurement position on the raceway surface of each of the plurality of other bearings and at least one fourth measurement position on the reference surface of each of the plurality of other bearings are measured using the ECT device, using an equation (4):

$$\Delta V_0=V_3-V_4 \quad . \quad . \quad . \quad (4)$$

where $V_0$ is an initial voltage difference (V),
$V_3$ is a third voltage value (V) at a third measurement position, and
$V_4$ is a fourth voltage value (V) at a fourth measurement position.

6. The method for understanding damage of the bearing according to claim 5, wherein the method uses raceway surface diameter of the bearing as the dimension.

7. The method for understanding damage of the bearing according to any one of claims 1 to 6, wherein the first measurement position is a maximum damage position to which a load is applied most when the bearing is used.

8. The method for understanding damage of the bearing according to any one of claims 1 to 6, wherein in the measurement step, the method measures a plurality of the second measurement positions and uses, as the measurement result, an average value of measured values at the plurality of second measurement positions.

9. The method for understanding damage of the bearing according to any one of claims 1 to 8, wherein

when the bearing is an outer ring, the reference surface is an outer diameter surface or an end surface of the outer ring, and
when the bearing is an inner ring, the reference surface is an inner diameter surface or an end surface of the inner ring.

# FIG. 1A

# FIG. 1B

# FIG. 2

# FIG. 3A

# FIG. 3B

# FIG. 4A

# FIG. 4B

# FIG. 5

```
       START
         │
         ▼
┌─────────────────────────┐
│    CALCULATE DAMAGE     │── S100
│   EXTENT D OF BEARING   │
└─────────────────────────┘
         │
         ▼
┌─────────────────────────┐
│    DETERMINE DAMAGE     │── S102
│   EXTENT D OF BEARING   │
└─────────────────────────┘
         │
         ▼
        END
```

# FIG. 6

# FIG. 7

# FIG. 8

## INTERNATIONAL SEARCH REPORT

| International application No. |
| --- |
| **PCT/JP2022/035248** |

### A. CLASSIFICATION OF SUBJECT MATTER

*G01M 13/04*(2019.01)i; *G01N 27/90*(2021.01)i
FI: G01M13/04; G01N27/90

According to International Patent Classification (IPC) or to both national classification and IPC

### B. FIELDS SEARCHED

Minimum documentation searched (classification system followed by classification symbols)

G01M13/04; G01N27/90

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2014-55941 A (NSK LTD) 27 March 2014 (2014-03-27)<br>paragraphs [0027]-[0028] | 1-9 |
| A | WO 2011/074654 A1 (NSK LTD) 23 June 2011 (2011-06-23)<br>entire text, all drawings | 1-9 |
| A | JP 2004-198246 A (NSK LTD) 15 July 2004 (2004-07-15)<br>entire text, all drawings | 1-9 |
| A | JP 2013-160561 A (NSK LTD) 19 August 2013 (2013-08-19)<br>entire text, all drawings | 1-9 |
| A | JP 2014-98409 A (NSK LTD) 29 May 2014 (2014-05-29)<br>entire text, all drawings | 1-9 |

☐ Further documents are listed in the continuation of Box C.    ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **16 November 2022** | **06 December 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/035248**

| Patent document cited in search report | | | Publication date (day/month/year) | Patent family member(s) | Publication date (day/month/year) |
|---|---|---|---|---|---|
| JP | 2014-55941 | A | 27 March 2014 | (Family: none) | |
| WO | 2011/074654 | A1 | 23 June 2011 | US 2011/0241661 A1 entire text, all drawings CN 102216862 A | |
| JP | 2004-198246 | A | 15 July 2004 | (Family: none) | |
| JP | 2013-160561 | A | 19 August 2013 | (Family: none) | |
| JP | 2014-98409 | A | 29 May 2014 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H04036633 A
- JP 2014013188 A
- JP 2013160561 A